# DEMANDE DE BREVET EUROPEEN

(11) **EP 2 105 854 A1**
(43) Date de publication de la demande: **30.09.2009**
(21) Numéro de dépôt: 09156395.7
(22) Date de dépôt: 27.03.2009
(51) Int. Cl.: G06F 17/30

(54) **Procédé de détermination de données complémentaires relatives à au moins un contenu, procédé pour transmettre ces données complémentaires, dispositif de traitement et serveur d'applications associés**

(30) Priorité: 28.03.2008 FR 0801689
(71) Demandeur: Alcatel Lucent, 75008 Paris (FR)
(72) Inventeur: Verdot, Vincent, 91620 NOZAY (FR); Gaste, Yann, 91620 NOZAY (FR)
(74) Mandataire: Hedarchet, Stéphane

(57) **Abrégé**

L'invention concerne un procédé de détermination de données complémentaires relatives à au moins un contenu transmis sur un réseau de télécommunication associées à au moins une portion d'adresse dudit contenu, comprenant les étapes suivantes :
- on reçoit d'une part une adresse (9) d'au moins un contenu, et d'autre part des données complémentaires (11,11') associées à ladite adresse (9),
- on compare ladite adresse (9) reçue avec des adresses de contenu (10) enregistrées pour déterminer au moins une portion d'adresse commune,
- on identifie au moins une donnée complémentaire récurrente parmi les données complémentaires (11,11') associées à ladite adresse (9) reçue et auxdites adresses (10) enregistrées ayant une portion d'adresse commune, et
- on enregistre ladite portion d'adresse commune et les données complémentaires récurrentes associées identifiées.

L'invention concerne encore un procédé de transmission de ces données complémentaires, ainsi qu'un dispositif de traitement de données et un serveur d'applications pour la mise en oeuvre de tels procédés.

## Description

L'invention concerne un procédé de détermination de données complémentaires relatives à au moins un contenu destiné à être transmis sur un réseau et associées à au moins une portion d'adresse dudit contenu.

L'invention concerne encore un procédé pour transmettre des données complémentaires à partir d'au moins une adresse de contenu destiné être transmis sur un réseau.

L'invention concerne également un dispositif de traitement de données et un serveur d'applications pour la mise en oeuvre de tels procédés.

On entend ici par contenu des ensembles de données définissant un programme de télévision, ou de vidéo, ou audio (radiophonique ou musical), ou multimédia ou encore un fichier informatique de données (ou « data »).

De plus, on entend par réseau, tout type de réseau fixe ou mobile (par exemple de type GSM, GPRS, UMTS ou WiFi, ou encore un réseau Internet, ou un réseau câblé), capable de transmettre, par exemple par voie filaire ou sans fil, des contenus à des terminaux qui sont couplés à lui, et d'échanger avec ces mêmes terminaux des données ou des messages.

Tout mode de transmission de contenu peut être envisagé, et notamment le mode point-à-point (ou « unicast ») ou le mode point-à-multipoints (ou « multicast »), ou encore le mode diffusion (ou « broadcast »).

Par ailleurs, on entend pas terminal tout type d'équipement capable de recevoir des contenus d'un réseau du type précité et d'échanger des données, messages et requêtes avec ce même réseau de télécommunication.

Il pourra par exemple s'agir d'un téléphone mobile ou fixe, d'un assistant personnel numérique (ou PDA), d'un décodeur de programmes de télévision ou vidéos cryptés, d'un équipement de réception de programmes de télévision de type « Set-top box », d'un équipement de réception de programmes vidéos au musicaux, ou d'un ordinateur fixe ou portable, ou d'un équipement embarqué dans une véhicule (voiture, camion, bus, train, et analogues).

Afin de satisfaire un grand nombre de clients, les fournisseurs de contenus proposent à leurs clients, de plus en plus de services personnalisés, par exemple interactifs par le biais de serveurs d'applications. La multiplication de ces services a pour effet d'offrir à l'utilisateur un choix de plus en plus important.

On entend ici par applications, une application interactive ou non, chargée lorsqu'elle est exécutée d'offrir un service à l'utilisateur d'un terminal. Une telle application se présente par exemple sous la forme d'un script exécutable ou d'un programme exécutable.

Parmi les applications de service de type interactif, on peut notamment citer les applications de pari, de vote, d'achat, de téléchargement ou encore de partage de contenus, comme par exemple des sonneries de téléphone, des textes, des vidéos, des publicités, des jeux.

De façon classique, les contenus transmis par les fournisseurs de contenus sont associés à des informations, par exemple des métadonnées dites « metadata » en anglais, servant à identifier et décrire ce contenu.

Les métadonnées sont des ensembles d'éléments ou d'attributs qui fournissant un contexte, permettant ainsi au serveur d'applications d'accéder à l'information, de l'extraire et de la comprendre, en vue de permettre par exemple la gestion et l'usage du contenu.

Toutefois pour certains contenus ces métadonnées sont optionnelles.

Par ailleurs lorsqu'elles sont associées à un contenu, elles peuvent être minimes et nécessiter d'importantes ressources d'analyse du serveur d'applications.

En outre, ces métadonnées sont généralement fixes et n'évoluent pas, par exemple pour une adaptation en fonction de l'intérêt des utilisateurs pour le contenu associé.

L'invention a donc pour but d'améliorer les services interactifs connus, en permettant de fournir des informations relatives à un contenu adaptables au cours du temps, de façon automatique, et en nécessitant peu de ressources d'analyse.

A cet effet, l'invention a pour objet un procédé de détermination de données complémentaires relatives à au moins un contenu destiné à être transmis sur un réseau et associées à au moins une portion d'adresse dudit contenu, comprenant les étapes suivantes :
- on reçoit d'une part une adresse d'au moins une contenu, et d'autre part des données complémentaires associées à ladite adresse,
- on compare ladite adresse reçue avec des adresses de contenu enregistrées pour déterminer au moins une portion d'adresse commune,
- on identifie au moins une donnée complémentaire récurrente parmi les données complémentaires associées à ladite adresse reçue et auxdites adresses enregistrées ayant une portion d'adresse commune, et
- on enregistre ladite portion d'adresse commune et les données complémentaires récurrentes associées identifiées.

De façon, préférentielle, d'une part les adresses et les données complémentaires associées, et d'autre part les portions d'adresse communes et les données complémentaires récurrentes associées sont enregistrées dans des moyens de mémorisation comportant une base de connaissance.

Judicieusement, ledit réseau est un réseau de sous-système multimédia IMS qui met en oeuvre le protocole de communication Internes I.P.

Avantageusement ledit procédé de détermination de données complémentaires comprend les étapes suivantes :
- on analyse les communications sur ledit réseau de manière à pouvoir extraire des données complémentaires associées à une adresse de contenu,
- on transmet les données complémentaires extraites, et
- on enregistre les données complémentaires extraites transmises.

L'invention a encore pour objet un procédé pour transmettre des données complémentaires à partir d'au moins une adresse de contenu destiné à être transmis sur un réseau, comprenant les étapes suivantes :
- on reçoit au moins une adresse de contenu,
- on détermine si ladite adresse reçue comporte au moins une portion d'adresses commune avec des portions d'adresse enregistrées associées à des données complémentaires, lesdites données complémentaires étant déterminées à partir d'un procédé de détermination de données complémentaires relatives au moins un contenu destiné à être sur un réseau et associées à au moins une portion d'adresse dudit contenus, comprenant les étapes suivante :
   - on reçoit d'une part une adresse d'au moins un contenu, et d'autre part des données complémentaires associées à ladite adresse,
   - on compare ladite adresse reçue avec des adresses de contenu enregistrées pour déterminer au moins une portion d'adresse commune,
   - on identifie au moins une donnée complémentaire récurrente parmi tes données complémentaires associées à ladite adresse reçue et auxdites adresses enregistrées ayant une portion d'adresse commune, et
   - on enregistre ladite portion d'adresse commune et les données complémentaires récurrentes associées identifiées, et
- on transmet les données complémentaires associés aux portions d'adresse déterminées.

L'invention a également pour objet un dispositif de traitement de données, comprenant au moins un moyen de traitement pour :
- recevoir d'une part une adresse d'au moins un contenu, et d'autre part des données complémentaires associées à ladite adresse reçue,
- comparer ladite adresse reçue avec des adresses enregistrées pour déterminer au moins une portion d'adresse commune,
- identifier au moins une donnée complémentaire récurrente parmi les données complémentaires associées à ladite adresse reçue et auxdites adresses enregistrées ayant une portion d'adresse commune, et
- enregistrer ladite portion d'adresse commune et les données complémentaires récurrente associées identifiées,

L'invention a encore pour objet un dispositif de traitement de données, comprenant au moins un moyen de traitement pour :
- recevoir au moins une adresse de contenus,
- déterminer si l'adresse reçue comporte au moins une portion d'adresse commune avec des portions d'adresse enregistrées associées à des données complémentaires, lesdites données complémentaires étant déterminées à partir d'un procédé de détermination de données complémentaires relatives à au moins une contenu destiné à être transmis sur un réseau et associées à au moins une portion d'adresse dudit contenu, comprenant les étapes suivantes :
   - on reçoit d'une part une adresse d'au moins un contenu, et d'autre part des données complémentaires associée à ladite adresse,
   - on compare ladite adresse reçue avec des adresses de contenu enregistrées pour déterminer au moins une portion d'adresse commune,
   - on identifie au moins une donnée complémentaire récurrente parmi les données complémentaires associées ladite adresse reçue et auxdites adresses enregistrées ayant une portion d'adresse commune, et
   - on enregistre ladite portion d'adresse commune et les données complémentaires récurrentes associées identifiées, et
- transmettre les données complémentaires associées aux portions d'adresse déterminées.

L'invention a également pour objet un serveur d'applications, comprenant au moins un moyen de traitement pour :
- recevoir d'une part une adresses d'au moins un contenu, et d'autre part des donnée complémentaires associées à ladite adresse, et
- transmettre une requête de détermination de données complémentaires récurrentes associées à au moins une portion d'adresse de ladite adresses reçue, ladite requête comportant d'une part ladite adresse reçue et d'autre part les données complémentaires associés.

L'invention a aussi pour objet un serveur d'applications, comprenant au moins un moyen de traitement pour :
- recevoir au moins une adresse de contenu,
- envoyer une requête de génération de données complémentaires à partir de ladite adresse, ladite requête comportant ladite adresse, et
- recevoir des données complémentaires associées à au moins une portion d'adresse de ladite adresse, lesdites données complémentaires étant déterminées à partir d'un procédé de détermination de données complémentaires relatives à au moins un contenu destiné à être transmis sur un réseau et associées au moins une portion d'adresse dudit contenu, comprenant les étapes suivantes :
   - on reçoit d'une part une adresse d'au moins un contenu, et d'autre part des données complémentaires associées à ladite adresse,
   - on compare ladite adresse reçue avec des adresses de contenu enregistrées pour déterminer au moins une portion d'adresse commune,
   - on identifie au moins une donnée complémentaire récurrente parmi les données complémentaires associées à ladite adresse reçue et auxdites adresses enregistrées ayant une portion d'adresse commune, et
   - on enregistre ladite portion d'adresse commune et les données complémentaires récurrentes associées identifiées.

D'autres caractéristiques et avantages de l'invention ressortiront de la description suivante, donnée à titre d'exemple, sans caractère limitatif, en regard des dessins annexes sur lesquels :
- la figure 1 illustre schématiquement la structure générale d'un système pour la mise en oeuvre d'un procédé de détermination de données complémentaires selon l'invention et d'un procédé de transmission de ces données complémentaires selon l'invention,
- la figure 2a illustre un exemple de détermination de données complémentaires,
- la figure 2b illustre un exemple de transmission de données complémentaires,
- la figure 3a représente les étapes successives d'un procédé de détermination de données complémentaires selon l'invention, et
- la figure 3b représente les étapes successives d'un procédé de génération de transmission de ces données complémentaires selon l'invention.

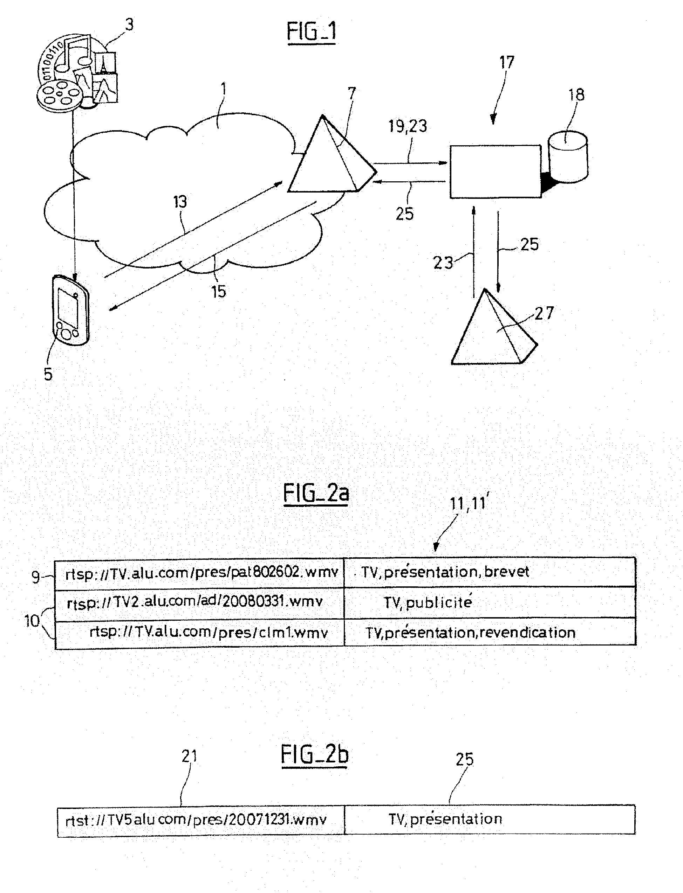

Sur la figure 1 est représenté un réseau 1, par exemple un réseau de télécommunications fixe ou mobile (par exemple de type GSM, GPRS, UMTS ou WIFI ou encore un réseau Internet ou un réseau câblé).

Le réseau 1 peut être tout type de réseau capable de transmettre, par exemple par voie filaire ou sans fil, des contenus à des terminaux qui sont couplés à lui, et d'échanger avec ces mêmes terminaux des données ou des messages.

Tout mode de transmission de contenu, peut être envisagé, et notamment le mode point-à-point (ou « unicast ») ou le mode point-à-multipoints (ou « multicast »), ou encore le mode diffusion (ou « broadcast »).

De façon préférée, le réseau 1 met en oeuvre le protocole de communication Internet I.P. pour Internet Protocol.

Le réseau 1 peut ainsi transmettre des informations sous la forme de paquets, chaque paquet comprenant une entête indiquant une adresse I.P. du destinataire des paquets de telle sorte que les paquets peuvent suivie différents chemins pour parvenir au destinataire.

Un fournisseur de contenus 3 est relié au réseau 1 et transmet par le réseau 1 des contenus par exemple sous forme de flux à destination, de terminaux 5 aptes à recevoir et à afficher, par exemple sur un écran, les contenus transmis.

Le contenu transmis par le réseau 1 peut être un contenu audiovisuel par exemple des programmes de télévision ou de radio, ou des vidéos, ou encore des jeux.

Le terminal 5 peut être par exemple un téléphone mobile ou fixe, un assistant personnel numérique (ou PDA), un équipement de réception de programmes de télévision, un équipement de réception de programmes vidéos ou musicaux, ou un ordinateur fixe ou portable, ou encore un équipement embarqué dans un véhiculé (voiture, camion, bus, train, et analogues).

Le terminal 5 est en outre apte à échanger des données, messages et requêtes avec le réseau de télécommunication 1 et en particulier avec un serveur d'applications 7 relié au réseaux 1 comme cela sera décrit plus loin.

En effet, lorsque que le terminal 5 affiché un contenu reçu d'un fournisseur de contenu 3 via le réseau 1, un utilisateur du terminal 5 peut obtenir un service en relation avec le contenu reçu, par exemple pour marquer et/ou partageur le contenu reçu.

Pour cela, le terminal 5 comporte au moins un moyen de traitement pour :
- sélectionner le contenu reçu,
- enregistrer une adresse 9 (voir figure 2a) du contenu sélectionné,
- générer et associer à l'adresse 9 des données complémentaires 11, par exemple le titre du contenu sélectionné, des commentaires sur le contenu sélectionné, la chaîne de télévision ayant transmis le contenu, le format du contenu ou toute autre donnée de description et/ou d'informations du contenu, et
- transmettre sur le réseau 1 l'adresse 9 et les données complémentaires associées, par exemple dans une requête de service 13. Cette requête 13 peut comporter en outre au moins une donnée d'identification du terminal 5 ayant généré la requête 13.

L'adresse 9 du contenu est avantageusement une chaîne de caractères codée selon une norme de codage de caractères, par exemple ASCH pour « American Standard Code for Information Interchange » en anglais.

Selon un mode de réalisation préférentiel l'adresse 9 est un localisateur uniforme de ressources URL pour « Uniform Resource Locator » qui permet d'indiquer comment accéder au contenu qu'elle identifie.

Prenons pour exemple l'URL fictive suivante : « rtsp://TV.alu.com/pres/pat802602.wmv », voir figure 2a.

Cette URL comporte :
- l'indication du protocole de communication utilisé pour accéder à cette ressource, ici rtsp pour Real Time Streaming Video, suivie du caractère de séparation obligatoire « : », et
- un ensemble de paramètres permettant de localiser sur le réseau la ressource hébergeant le contenu, cet ensemble de paramètre comprend :
   - la chaîne de caractère « //» permet de préciser à ressource hébergeant le contenu avant le chemin d'accès au contenu,
   - le nom de domaine de la ressource hébergeant le contenu, ici « TV.alu.com» relatif à la chaîne de télévision « TV »,
   - le chemin absolu pour accéder au contenu, ce chemin commence par le caractère « / », ici par exemple le chemin d'accès est « /pres/pat802602 »,
   - une extension, ici « .wmv » qui permet au serveur 7 de savoir comment traiter le contenu.

Dans la suite de la description, on appelle portion d'adresse tout paramètre d'une part compris entre l'indication de protocole et l'extension et d'autre part délimité par un caractère « / ». Dans l'exemple ci-dessus, on identifie donc les portions d'adresse « TV.alu.com », « près », et « pat802602 ».

Préférentiellement le serveur d'applications 7 comprend au moins un moyen de traitement pour recevoir la requête 13, et traiter cette requête 13.

En traitant la requête 13, le serveur 7 accède alors à l'adresse 9 du contenu sélectionné, aux données complémentaires 11 associées, et éventuellement aux données d'identification du terminal 5 ayant généré la requête 13.

On peut prévoir que pour une même adresse 9 d'un contenu, le serveur 7 reçoit différentes données complémentaires 11 associées générées par des utilisateurs de terminaux différents.

Dans ce cas, le serveur 7 comprend au moins un moyen de traitement pour analyser les différentes données complémentaires 11 reçues afin de déterminer un ensemble 11' de mots-clés pertinents par rapport aux informations contenues dans ces différentes données complémentaires 11.

Plus précisément, le serveur 7 est par exemple apte à :
- identifier des données complémentaires communes parmi les différentes données complémentaires 11 reçues,
- vérifier si le nombre de données complémentaires 11 comportant les données communes identifiées atteint un seuil prédéfini, et
- dans ce cas, associe les données complémentaire communes, formant un ensemble 11' de mots-clés, à l'adresse 9.

Le serveur 7 peut en outre comporter au moins un moyen de traitement pour trier l'ensemble 11' de mots-clés, de manière à classeur les mots-clés suivant un ordre prédéterminé.

Préférentiellement le serveur 7 comprend de plus au moins une moyen de traitement pour envoyer au terminal 5 ayant généré la requête 13 une réponse de services 15. Cette réponse de service 15 peut comprendre un message de confirmation, ou d'interrogation en relation avec le service fourni.

De façon préféré, le serveur 7 comprend également des moyens de gestion de contenus.

Par ailleurs, le serveur 7 comprend en outre au moins un moyen de traitement pour transmettre à un dispositif de traitement de données 17 du réseau 1 une requête 19 de détermination de données complémentaires récurrentes associées à au moins une portion d'adresse de l'adresse 9 « rtsp://TV.alu.com/pres /pat80260.wmv».

Cette requête 19 comporte d'une part l'adresse 9 et d'autre part les données complémentaires 11 associées.

De façon avantageuse, les données complémentaires transmises sont les données complémentaires communes formant l'ensemble 11' de mots-clés, par exemple ici les mots-clés « TV, présentation, brevet» associés à l'adresse 9.

Selon une mode de réalisation avantageux, le dispositif de traitement 17 peut être couplé au serveur 7.

Selon l'invention, le dispositif de traitement 17 comprend au moins un moyen de traitement pour :
- recevoir d'une part une adresse 9 d'un contenu, ici «rtsp://TV.alu.com/pres/pat802602.wmv», et d'autre part les données complémentaires 11, 11' associées à l'adresse 9 ici «TV, présentation, brevet », transmises par exemple par le serveur 7 dans la requête 19,
- comparer l'adresse 9 reçue avec des données d'identification 10 enregistrées « rtsp://TV2.alu.com/ad/20080331.wmv » et « rtsp: //TR.alu.com /pres /clm1.wmv » dans l'exemple illustré sur la figure 2a, afin de déterminer des portions d'adresse communes, ici « TV.alu.com», et « pires »,
- identifier au moins une donnée complémentaire récurrente
   - d'une part parmi les données complémentaires 11,11' « TV, présentation, brevet» associées à l'adresse 9 reçue et « TV, publicité» et « TV, présentation, revendication » associées données d'identification 10 ayant la portion d'adresse commune « TV.alu.com », et
   - d'autre part parmi les données complémentaires 11,11' «TV, présentation, brevet » associées à l'adresse 9 reçue et «TV, présentation, revendication associées à l'adresse 10 ayant la portion d'adresse commune « près », et
- enregistrer respectivement les portions d'adresse communes, « TV.alu.com» et « pres» et respectivement les données complémentaires récurrentes associées identifiées « TV » et « présentation ».

De façon préférentielle, le dispositif de traitement 17 enregistre les adresses 9,10 et les données complémentaires 11,11' associées d'une part et les portions d'adresse communes et les données complémentaires récurrentes d'autre part, dans des moyens de mémorisation. Ces moyens de mémorisation peuvent comporter une base de connaissance 18. Cette base de connaissance 18 peut être interne ou externe au dispositif de traitement 17.

Avantageusement, les données complémentaires 11,11' enregistrées dans la base de connaissance 18 ont été générées par les utilisateurs d'un groupement ou d'une communauté, de sorte que les données complémentaires récurrentes identifiées sont personnalisées et adaptées aux utilisateurs de ce groupement.

Cette base de connaissance 18 s'enrichit en fonction des données complémentaires 11,11' ajoutées part les utilisateurs du groupement. En effet, plus les utilisateurs transmettent des données d'identification et des données complémentaires associées, plus le nombre de portions d'adresse communes et de données complémentaires récurrentes associées identifiées augmente.

Judicieusement le réseau 1 est un réseau de sous-système multimédia utilisant le protocole I.P. « IMS » pour Internet protocole Multimédia Subsystem, et permet alors de fournir des services multimédia fixes et mobiles, tels que la Voix sur IP (VoIP), la messagerie instantané, ou encore les informations de présence,

Avantageusement, un composant intégré au réseau IMS comprend au moins un moyen de traitement pour analyser les communications sur le réseau IMS de manière à pouvoir extraire des données complémentaires associées à une adresse d'au moins un contenu sélectionné par un utilisateur d'un terminal. Le composant réseau transmet ensuite les données complémentaires extraites de façon avantageuse au dispositif de traitement 17.

Bien entendu, le dispositif de traitement 17 comporte au moins un moyen de traitement pour :
recevoir des données complémentaires extraites transmises par le composant réseau, et
enregistrer les données complémentaires extraites dans la base de connaissance 18.

Le composant réseau est par exemple un agent de présente « PNA » pour "Presence Network Agent ».

Le composant réseau, peut être réalisé sous la forme d'un serveur mandataire IMS ou « IMS proxy » en sanglais, ou encore d'un serveur d'applications IMS.

Ainsi, lorsqu'un utilisateur envoie une adressé 9 d'un contenu par un moyen de communication IMS, par exemple une message texte instantané, un email, un appel vocal, les informations contenues dans ce moyen de communication IMS peuvent être transmises au dispositif de traitement 17, afin qu'elles soient également associées à la adresse 9. La base de connaissance 18 peut ainsi s'enrichir de façon automatique.

Il est évident que l'utilisateur aura au préalable donné son accord pour l'exploitation des informations qu'il transmet via le réseau IMS. Ainsi le dispositif de traitement 17 peut exploiter, en plus des données complémentaires 11 ,11' volontairement générées par l'utilisateur via le serveur 7, des informations transitant par les moyens de communication IMS.

Préférentiellement, le serveur 7 et/ou un serveur tiers 27 d'applications du réseau 1 comprend au moins un moyen de traitement pour :
- recevoir au moins une adresse 21 de contenu « rtsp://TV5.alu.com/pres/20071231.wmv » dans l'exemple illustré à la figure 2b, par exemple transmise par un terminal du réseau 1 dans une requête de service,
- envoyer une requête 23 de transmission de données complémentaires 25 à partir de l'adresse 21, ladite requête 23 comportant l'adresse 21, et
- recevoir des données complémentaires 25 associées à au moins une portion d'adresse de l'adresse 21.

De façon avantageuse, le serveur 7,27 ayant transmis la requête 23 est apte à exploiter les données complémentaires reçues 25.

Avantageusement, le dispositif de traitement 17 comprend au moins un moyen de traitement pour :
- recevoir une adresse de contenu 21, par exemple l'adresse fictive «rtsp://TV5.alu.com/pres/20071231.wmv», transmise dans une requête 23 de transmission de données complémentaires,
- déterminer si l'adresse 21 reçue comporte au moins une portion d'adresse commune avec des portions d'adresse enregistrées ici « TV.alu.com » et « pres » associés respectivement aux données complémentaires « TV » et « présentation », et
- transmettre les données complémentaires récurrentes 25 « TV » et « présentation » associés respectivement aux portions d'adresse déterminées «TV.alu.com », et « près ».

De façon avantageuse, le dispositif de traitement 17 comprend au moins un moyen de traitement pour :
- vérifier si l'adresse 21 reçue est déjà enregistrée, par exemple dans la base de connaissance 18, et
- transmettre les données complémentaires associées a cette adresse 21, lorsqu'elle est déjà enregistrée.

Selon une variante de réalisation, le dispositif de traitement 17 comprend au moins un moyen de traitement pour supprimer de façon automatique les données enregistrées dans la base de connaissance 18 si le quota d'utilisation par rapport à la durée de disponibilité est intérieur a un seul prédéterminé.

Un conséquence, la base de connaissance 18 ne se retrouve pas encombrée de données obsolètes.

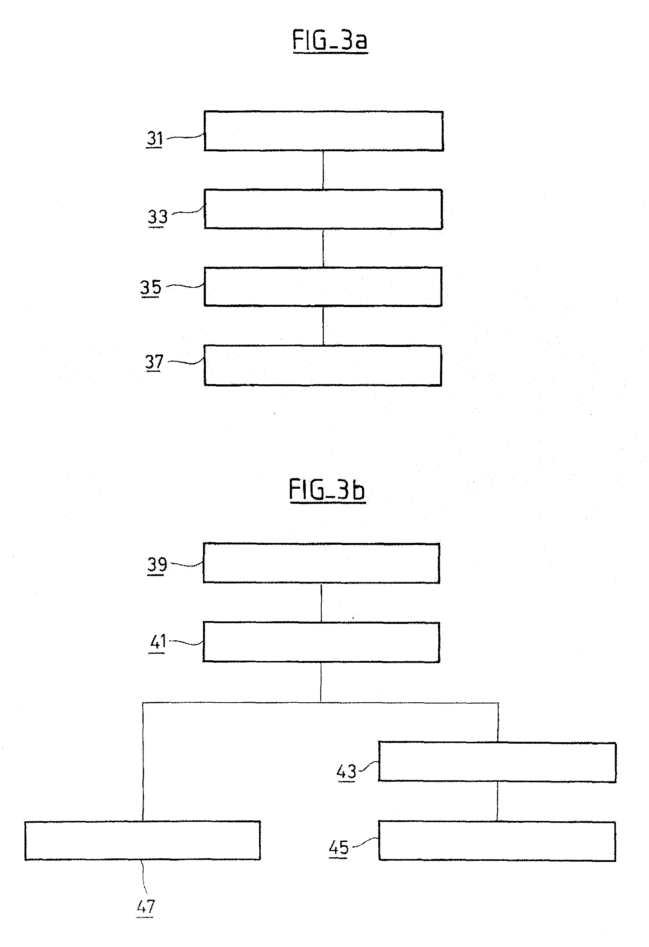

Comme l'illustre la figure 3a, le procédé de détermination de données complémentaires relatives à au moins un contenu destiné à être transmis sur un réseau 1 et associées à au moins une portion d'adresse du contenu comprend plusieurs étapes détaillées ci-après.

Selon l'invention, le dispositif de traitement 17 reçoit lors d'une étape 31 d'une part une adresse 9 d'au moins un contenu, et d'autre part les données complémentaires 11,11' associés à l'adresse 9, transmises par exemple par un serveur d'applications 7 dans une requête 19 de détermination de données complémentaires.

A la suite de l'étape 31, le dispositif de traitement 17 peut enregistrer les données d'identification 9 et les données complémentaires 11,11' associées. De façon avantageuse, l'enregistrement s'effectue dans la base de connaissance 18.

Lors de l'étape 33 le dispositif de traitement 17 compare l'adresse 9 reçue avec les adresses 10 enregistrées, afin de déterminer au moins une portion d'adresse commune.

Le dispositif de traitement 17 identifie ensuite à l'étape 35 au moins une donnée complémentaire récurrente parmi les donnée complémentaires associées à l'adresse 9 reçue et aux adresses enregistrées 10 ayant une portion d'adresse commune.

Puis le dispositif de traitement 17 enregistre lors de l'étape 37 la portion d'adresse commune et les données complémentaires récurrentes associées identifiées. De façon avantageuse, l'enregistrement s'effectue dans la base de connaissance 18.

judicieusement le réseau est un réseau de sous-système multimédia utilisant le protocole I.P. « IMS » pour Internet protocole Multimédia Subsystem, et un composant intégré au réseau IMS analyse de façon avantageuse les communications sur le réseau 1 de manière à pouvoir extraire des données complémentaires associées à l'adresse 9, puis transmettre les donnés complémentaires extraites au dispositif de traitement 17. Le dispositif de traitement 17 reçoit alors ces données supplémentaires à l'étape 31.

Ce procédé de détermination de données complémentaires est avantageusement mis en oeuvre par un système comportant au moins un dispositif de traitement de données 17 et au moins un serveur d'applications 7 tel que décrit ci-dessus.

Comme l'illustre la figure 3b, le procédé pour transmettre des données complémentaires à partir d'au moins une adresse de contenu comprend plusieurs étapes détaillées ci-après.

Au cours d'une étape 39, le dispositif de traitement 17 reçoit au moins une adresse 21 de contenu, transmise par exemple par un serveur d'applications 7,27 du réseau 1 dans une requête 23 de transmission de données complémentaires.

Le dispositif de traitement 17 peut vérifier si l'adresse 21 reçue est enregistrée, par exemple dans la base de connaissance 18, dans ce cas on peut prévoir que le dispositif de traitement est apte à comparer les données d'identification enregistrées avec l'adresse reçue, c'est l'étape 41.

Par exemple, dans le cas où l'adresse 21 reçue est nouvelle, le dispositif de traitement 17 détermine à l'étape 43 si l'adresse 21 reçue comporte au moins une portion d'adresse commune avec des portions d'adresse enregistrées par exemple dans la base de connaissance 18.

Puis à l'étape 45, le dispositif de traitement 17 transmet les données complémentaires récurrentes enregistrées avec les portions d'adresse déterminées.

De façon avantageuse, à la suite de l'étape 41 lorsque l'adresse 21 reçue est déjà enregistrée, par exemple dans la base de connaissance 18, le dispositif de traitement 17 transmet à l'étape 47 les données complémentaires associées cette adresse 21.

Ce procédé de transmission de données complémentaires est avantageusement mis en oeuvre par un système comportant au moins un dispositif de traitement de données 17 et au moins un serveur d'applications 7,27 tel que décrit ci-dessus.

On comprend donc qu'avec un tel procédé, le dispositif de traitement fournit de façon automatique des informations directement exploitables par le serveur d'applications et adaptées aux utilisateurs.

De plus ces informations ne sont pas fixes et sont variable au cours du temps en fonction de l'activité des utilisateurs, et de leur intérêt pour un contenu donné.

En effet, plus des portions d'adresse associées à des données complémentaires sont enregistrées, plus on pourra fournir une information pertinente relative à un contenu donné à partir de l'adresse de ce contenu, même si elle n'a jamais été enregistrée auparavant. par exemple dans la base de connaissance.

## Revendications

1. Procédé de détermination de données complémentaires relatives à au moins une contenu destiné à être transmis sur un réseau et associées à au moins une portion d'adresse dudit contenu, comprenant les étapes suivantes :
- on reçoit d'une part une adresse (9) d'au moins un contenu, et d'autre part des données complémentaires (11,11') associées à ladite adresse (9),
- on compare ladite adresse (9) reçue avec des adresses de contenu (10) enregistrées pour déterminer au moins une portion d'adresse commune,
- on identifie au moins une donnée complémentaire récurrente parmi les données complémentaires (11,11') associées à ladite adresse (9) reçue et auxdites adresses (10) enregistrées ayant une portion d'adresse commune, et
- on enregistre ladite portion d'adresse commune et les données complémentaires récurrentes associées identifiées.

2. Procédé selon la revendication 1, dans lequel d'une part lesdites adresses (9,10) et les données complémentaires (11,11') associées, et d'autre part les portions d'adresse communes et les données complémentaires récurrentes associées sont enregistrées dans des moyens de mémorisation comportant une base de connaissance (18).

3. Procédé selon l'une quelconque des revendications 1 ou 2, dans lequel ledit réseau est un réseau de sous-système multimédia IMS qui met en oeuvre le protocole de communication Internet I.P..

4. Procédé selon la revendication 3, comprenant les étapes suivantes :
- on analyse les communications sur ledit réseau de manière à pouvoir extraire des données complémentaires associées à une adresse de contenu,
- on transmet les données complémentaires extraites, et
- on enregistre les données complémentaires extraites transmises.

5. Procédé pour transmettre des données complémentaires à partir d'au moins une adresse de contenu destiné à être transmis sur un réseau, comprenant les étapes suivantes :
- on reçoit au moins une adresse de contenu (21),
- on détermine si ladite adresse (21) reçue comporte au moins une portion d'adresse commune avec des portions d'adresse enregistrées associées à des données complémentaires, lesdites données complémentaires étant déterminées à partir d'un procédé de détermination de données complémentaires relatives à au moins un contenu destiné à être transmis sur un réseau et associées à au moins une portion d'adresse dudit contenu, comprenant les étapes suivantes :
• on reçoit d'une part une adresse (9) d'au moins un contenu, et d'autre part des données complémentaires (11,11') associées à ladite adresse (9),
• on comparer ladite adresse (9) reçue avec des adresses de contenu (10) enregistrées pour déterminer au moins une portion d'adresse commune,
• on identifie au moins une donnée complémentaire récurrente parmi les données complémentaires (11,11') associées à ladite adresse (9) reçue et auxdites adresses (10) enregistrées ayant une portion d'adresse commune, et
• on enregistre ladite portion d'adresse commune et les données complémentaires récurrentes associées identifiées, et
- on transmet les données complémentaires (25) associées aux portions d'adresse déterminées.

6. Dispositif de traitement de données, comprenant au moins un moyen de traitement pour :
- recevoir d'une part au moins une adresse (9) d'au moins un contenu, et d'autre part des données complémentaires (11,11') associées à ladite adresse (9) reçue,
- comparer ladite adresse (9) reçue avec des adresses de contenu (10) enregistrées pour déterminer au moins une portion d'adresse commune,
- identifier au moins une donnée complémentaire récurrente parmi les données complémentaires (11,11') associées à ladite adresse (9) reçue et auxdites adresses (10) enregistrées ayant une portion d'adresse commune, et
- enregistrer ladite portion d'adresse commune et les données complémentaires récurrentes associées identifiées.

7. Dispositif de traitement de données, comprenant au moins un moyen de traitement pour:
- recevoir au moins une adresse de contenu (21),
- déterminer si ladite adresse (21) reçue comporte au moins une portion d'adresse commune avec des portions d'adresse enregistrées associées à des données complémentaires, lesdites données complémentaires étant déterminées à partir d'un procédé de détermination de données complémentaires relatives à au moins un contenu destiné à être transmis sur un réseau et associées à au moins une portion d'adresse dudit contenu, comprenant les étapes suivantes :
• on reçoit d'une part une adresse (9) d'au moins un contenu, et d'autre part des données complémentaires (11,11') associées à ladite adresse (9),
• on compare ladite adresse (9) reçue avec des adresses de contenu (10) enregistrées pour déterminer au moins une portion d'adresse commune,
• on identifie au moins une donnée complémentaire récurrente parmi les données complémentaires (11,11') associées à ladite adresse (9) reçue et auxdites adresses (10) enregistrées ayant une portion d'adresse commune, et
• on enregistre ladite portion d'adresse commune et les données complémentaires récurrentes associées identifiées, et
- transmettre les données complémentaires (25) associées aux portions d'adresse déterminées.

8. Serveur d'applications, comprenant au moins un moyen de traitement pour :
- recevoir d'une part une adresse (9) d'au moins un contenu, et d'autre part des données complémentaires (11,11') associées à ladite adresse (9), et
- transmettre une requête (19) de détermination de données complémentaires récurrentes associées à au moins une portion d'adresse de l'adresse (9) reçue, ladite requête 19 comportant d'une part l'adresse (9) reçue et d'autre part les données complémentaires (11,11') associées.

9. Serveur d'applications, comprenant au moins un moyen de traitement pour :
- recevoir au moins une adresse de contenu (21),
- envoyer une requête (23) de transmission de données complémentaires à partir de ladite adresse (21), ladite requête 23 comportant ladite adresse (21), et
- recevoir des données complémentaires (25) associées à au moins une portion d'adresse de ladite adresse (21), lesdites données complémentaires étant déterminées à partir d'un procédé de détermination de données complémentaires relatives à au moins un contenu destiné à être transmis sur un réseau et associées à au moins une portion d'adresse dudit contenu, comprenant les étapes suivantes :
• on reçoit d'une part une adresse (9) d'au moins un contenu, et d'autre part des données complémentaires (11,11') associées à ladite adresse (9),
• on compare ladite adresse (9) reçue avec des adresses de contenu (10) enregistrées pour déterminer au moins une portion d'adresse commune,
• on identifie au moins une donnée complémentaire récurrente parmi les données complémentaires (11,11') associées à ladite adresse (9) reçue et auxdites adresses (10) enregistrées ayant une portion d'adresse commune, et
• on enregistre ladite portion d'adresse commune et les données complémentaires récurrentes associées identifiées.
